# EUROPEAN PATENT APPLICATION

(11) **EP 2 490 161 A1**
(43) Date of publication of application: **22.08.2012**
(21) Application number: 12168557.2
(22) Date of filing: 25.09.2008
(51) Int. Cl.: G06Q 10/00, G05B 23/02

(54) **Methods and apparatus to standardize data properties in a process control environment**

(30) Priority: 28.09.2007 US 864168
(62) Divisional of application: 08165064.0
(71) Applicant: Fisher-Rosemount Systems, Inc., Austin, TX 78759 (US)
(72) Inventor: Blevins, Terrence Lynn, Round Rock, TX Texas 78681 (US); Worek, Christopher, Austin, TX Texas 78717 (US); Nixon, Mark, Round Rock, TX Texas 78681 (US)
(74) Representative: Bohnenberger, Johannes

(57) **Abstract**

A method to standardize data properties in a process control environment (100) between geographically separated process control plants (A-C), a first process control plant (A) including a module (128a) having a plurality of function blocks (136a-d) that define functions performed by field devices (134a-c) to implement a process control routine, wherein the function blocks (136) cause the field devices (134a-c) to acquire measurement values such as pressure values, temperature values, flow values, voltage values or current values etc. The method comprises the steps of:
• executing a process control routine for a first process control plant (A) resulting in measurement values acquired by the field devices (134a-c);
• storing the measurement values in a data historian (118) of the first process control plant (A);
• associating data properties with a key, wherein the data properties represent measurement values of interest;
• storing the measurement values of interest in a history client (120) of the first process control plant (A) using the key;
• sending the associated key to a history standardizer (110), the history standardizer (110) communicatively linking the first process control plant (A) with geographically separated plants (B-C) via an intra-plant bus (102), in order to maintain consistency in a product of interest between geographically separated plants (A-C).

## Description

### FIELD OF THE DISCLOSURE

The present disclosure relates generally to process control systems and, more particularly, to methods and apparatus to standardize data properties in a process control environment.

### BACKGROUND

Process control systems, like those used in chemical, petroleum or other processes, typically include one or more centralized process controllers communicatively coupled to at least one host or operator workstation and to one or more field devices via analog, digital or combined analog/digital buses. The field devices, which may be, for example, valves, valve positioners, vessels, tanks, switches and transmitters (e.g., temperature, pressure and flow rate sensors), perform functions within the process such as opening or closing valves, raising/lowering temperatures and/or pressures, and measuring process parameters. The process controller receives signals indicative of process measurements made by the field devices and/or other information pertaining to the field devices, uses this information to implement a control routine, and then generates control signals that are sent over the buses or other communication lines to the field devices to control the operation of the process. Information from the field devices and the controllers may be made available to one or more applications executed by the operator workstation to enable an operator to perform desired functions with respect to the process, such as viewing the current state of the process, modifying the operation of the process, etc.

Process control system applications typically include process control routines that can be configured to perform various functions or operations in a process control system. For example, process control routines may be used to control valves, motors, boilers, heaters, and/or other devices that allow a product (e.g., petroleum, cosmetics, food, etc.) to be produced. The manufactured product may be dependent upon proper process control routine functionality, and/or may require tuning/alteration in an effort to bring product specifications within acceptable tolerances (e.g., chemical composition percentages, product viscosity, etc.).

Process control routines may also be used to monitor field devices, modules, plant areas, etc. and collect information associated with a process control system. Field devices used to implement the process control routines are typically coupled to one another and to a process controller via a data bus. In an effort to verify that the process control routines operate in a manner to maintain acceptable product tolerances, product batch parameters may be measured and saved during manufacture. Control operators, plant managers, and/or other individuals chartered with the responsibility of maintaining acceptable product quality may access one or more databases that store measured parameters associated with a product batch. However, because a process control system and associated equipment within the process control system may be used to manufacture any number of different products, the control operator typically needs to determine when a specific batch of interest was manufactured before analyzing batch data.

Additionally, if the control operator wishes to compare batches that were manufactured at moments in time separated by several days, several weeks, and/or several months, detailed batch logs must be maintained to associate the saved parameter measurement data with a batch production. Performing such associations typically involves a significant amount of control operator time while sifting through a large database of historical batch measurements.

### SUMMARY

Example apparatus and methods to standardize data properties in a process control system are described. An example method includes associating a function block with a primary key, and associating at least one data property associated with the process control environment with the primary key. The example method also includes storing an instance of the at least one data property in a history database associated with the process control environment.

In accordance with another example, an example apparatus includes a controller associated with a process control system to execute at least one function block and at least one field device operatively connected to the controller to measure a value associated with at least one data property. The example apparatus also includes a history client associated with the process control system to associate the at least one function block with a primary key.

### BRIEF DESCRIPTION OF THE DRAWINGS

FIG. 1 is a block diagram illustrating an example process control environment.

FIGS. 2A-2C depict a graphical user interface (GUI) representation of a profile configuration.

FIG. 3 is a block diagram of a portion of two process plants and related measurement data formats..

FIG. 4 depicts a GUI representation of data property analysis.

FIG. 5 is a flow diagram of an example method that may be used to implement the example apparatus of FIGS. 1-4 to standardize data properties.

FIG. 6 is a flow diagram of an example method to configure the example apparatus of FIGS. 1-4.

FIG. 7 is a flow diagram of an example method to measure properties with the example apparatus of FIGS. 1-4.

FIG. 8 is a flow diagram of an example method to evaluate data properties with the example apparatus of FIGS. 1-4.

FIG. 9 is a block diagram of an example processor system that may be used to implement the example systems and methods described herein.

### DETAILED DESCRIPTION

Although the following describes example apparatus and systems including, among other components, software and/or firmware executed on hardware, it should be noted that such systems are merely illustrative and should not be considered as limiting. For example, it is contemplated that any or all of these hardware, software, and firmware components could be embodied exclusively in hardware, exclusively in software, or in any combination of hardware and software. Accordingly, while the following describes example apparatus and systems, persons of ordinary skill in the art will readily appreciate that the examples provided are not the only way to implement such apparatus and systems.

Techniques used to compare batch measurements from one time period (e.g., a first batch process to make a product) with batch measurements from another time period (e.g., a second batch process to make the same product) typically require manual efforts to analyze a historical database for datapoints saved during the first and second batch processes. The historical database typically stores large amounts of measurement data that is associated with many different batch operations to make one or more products. As such, the historical database includes vast amounts of compressed measurement data that is not of immediate interest to a data analyst (e.g., a control operator, a plant manager, etc.). If records maintained by the data analyst indicate certain saved data was associated with a specific batch, then the analyst must decompress the data, locate datapoints that correspond to the desired batch information, extract the relevant datapoints from the database, and save the datapoints to an application to assist with further analyses (e.g., a spreadsheet). Compressed data may not be appropriate in some instances related to, for example, principal component analysis (PCA), projection(s) to latent structure(s) (PLS), etc. In the event that uncompressed data is available, then the data analyst must still locate one or more datapoints that correspond to the desired batch information.

In some instances, detailed records that identify an association between saved measurements and a corresponding batch do not exist. In those cases, analysts typically search the historical database for measurement values that are expected when a batch of interest is being studied. For example, if a batch process for a product of interest has three thermocouples in a vessel (e.g., a tank, a mixer, an oven, etc.) that exhibit an expected temperature profile over a predetermined time period, then the analyst may begin searching for such trends or data corresponding to the expected profile. However, many alternate batch-processes may exhibit a similar temperature profile, thereby making the search, identification, and extraction process difficult.

Unlike traditional techniques to search, identify, and extract relevant process datapoints from a data historian, in which the datapoints may be associated with a particular batch of a product of interest, the methods and apparatus described herein may be used to expedite the search and study of data properties in a process control system. In particular, the methods and apparatus described herein may allow an analyst to identify a product batch of interest and/or one or more specific phases within the batch of interest without exhaustively searching through a massive database and/or data historian in the traditional manner. Data properties exhibited by manufacturing equipment, sensors, and/or transducers may be tracked, measured, and stored so that an association exists between the stored data and the specific batch process (and/or one or more specific phases of the batch) that makes the product of interest. Rather than access a large historian and/or process database, keys associated with the product, batch, and/or phase of interest at the time of storage are employed to locate data properties associated therewith. Additionally, while a batch of interest may have many stages and/or phases, sub-keys may be employed to obtain data properties specific to one or more stages and/or phases of the batch of interest.

The methods and apparatus described herein also facilitate product, batch, and/or phase comparisons that allow an analyst to, in part, ascertain abnormal operating conditions. For example, a manufacturing plant may produce a batch of a product four times per year (e.g., summer, fall, winter, and spring). While a process control system typically employs control algorithms to keep all phases of a batch process consistent to yield a consistent end-product, environmental conditions of the plant may cause one or more phases of the batch process to deviate from target quality thresholds. Summer months may stress environmental systems within the plant that may cause one or more phases of a batch to experience higher temperatures, versus such temperatures during winter months. However, before an analyst can verify such temperature deviations based on seasonal factors or other factors, the analyst must first locate product, batch, and/or phase data properties and/or specific sub-phases of such batch data properties. Once the data properties are located, the analyst typically extracts the data properties to a spreadsheet before searching for another instance of the product batch (e.g., one instance during a summer season, a second instance during a fall season, a third instance during a winter season, etc.). Upon gathering two or more sets of data properties (e.g., two of more instances of the product, batch, and/or phase) of interest, the analyst may sort the data in a spreadsheet and generate one or more plots to look for seasonal-based data property deviation(s).

Using one or more keys to associate data properties with a specific product, a specific batch and/or specific phase within a batch enables an analyst to save time during subsequent analyses. The key association methods and apparatus described herein leave existing data historian formats unaltered to minimize any potential data parity issues with legacy database systems.

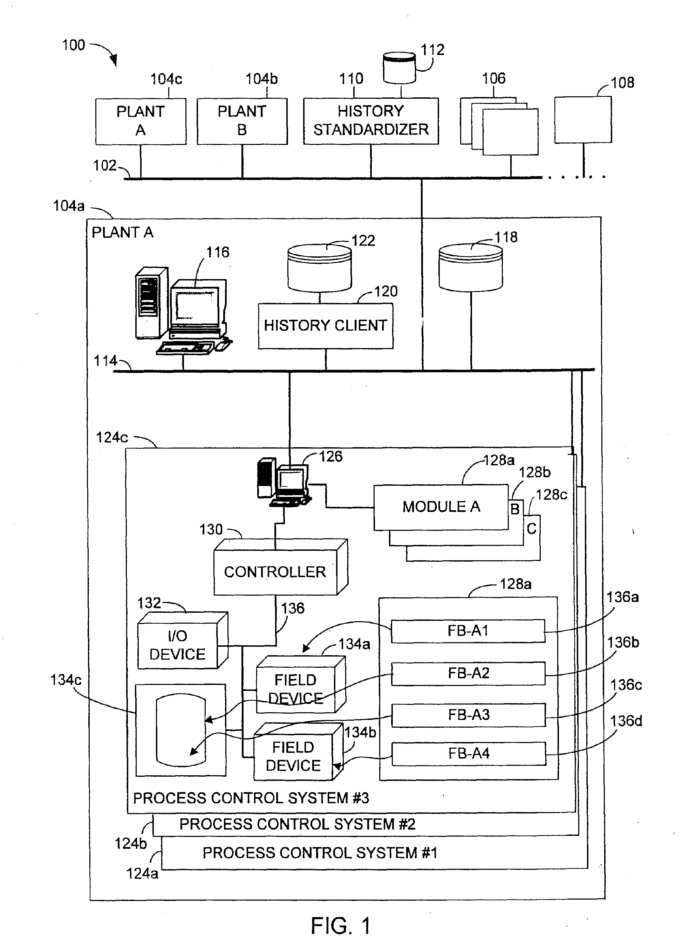

Now turning to FIG. 1, an example process control environment 100 that may be employed to implement the example methods and apparatus described herein includes an intra-plant bus 102 to facilitate communication between geographically separated plants 104a-c (plants A, B, and C, respectively). The intra-plant bus 102 may use any suitable local area network (LAN) or wide area network (WAN) protocol, one or more intranets, and/or the Internet to facilitate communication between one or more devices of the process control environment 100. The process control environment 100 also includes any number of business, control, and/or maintenance systems. Business and/or maintenance systems may execute, for example, enterprise resource planning (ERP), material resource planning (MRP), accounting, production and customer ordering systems.

The intra-plant bus 102 also facilitates communication between a corporate WAN 106, one or more remote monitoring computer systems 108, and a history standardizer 110. As described in further detail below, the history standardizer 110 facilitates analyst search functionality, and/or user interface functionality (e.g., a web server), which may expedite a more efficient searching and understanding of data property behavior and/or data property deviations from quality thresholds during one or more batch processes. The history standardizer 110 operatively communicates with a system history database 112 to save specific batch data (e.g., one or more data properties exhibited by a product batch process and/or one or more phases of a batch process) from one or more of the plants 104a-c.

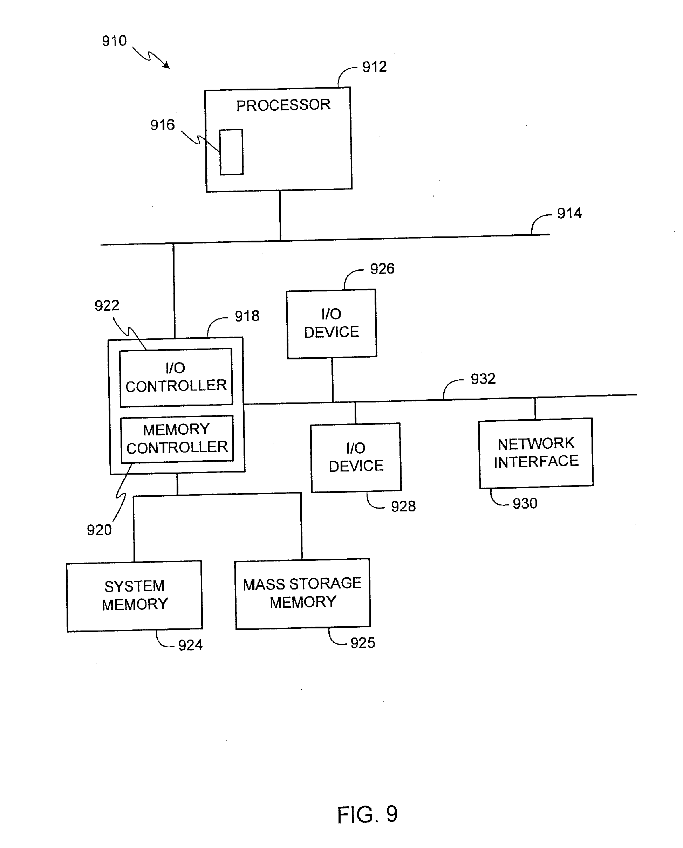

The example plant 104a represents an example manufacturing plant that may produce one or more products during one or more batch processes and/or batch phases. The example plant 104a includes a plant bus 114 to facilitate communication with the intra-plant bus 102 and one or more devices/systems of the plant 104a. The example plant 104a also includes a workstation 116, a data historian and/or database 118 to save data properties (e.g., sensor measurements, transducer measurements, valve positions, etc.), and a history client 120 communicatively connected to a local history database 122. The example workstation 116 may serve as an operator interface for the plant 104a, which may be communicatively connected to one or more process control systems 124a-c (process control systems #1, #2, and #3, respectively) via the plant bus 114. Each of the example process control systems (PCSs) 124a-c includes a workstation 126, one or more modules 128a-c, a controller 130 and an input/output (I/O) device 132. The workstation 126 may be configured to perform operations associated with one or more applications, user-interactive applications, communication applications, and/or one or more function blocks within the modules 128a-c. For example, the workstation 126 may be configured to perform operations associated with process control-related applications and communication applications that enable the workstation 126 and the controller 130 to communicate with other devices and/or systems using any communication media (e.g., wireless, hardwired, etc.) and protocols (e.g., HTTP, SOAP, etc.). The workstation 126 may be implemented using any suitable computer system or processing system (e.g., the processor system 910 of FIG. 9). For example, the workstation 126 could be implemented using a single processor personal computer, single or multi-processor workstations, etc.

The controller 130 may perform one or more process control routines that have been configured and/or designed by a plant manager, process-control engineer, system engineer, and/or other system operator chartered with the responsibility of operation of the plant 104a, the plant 104b, the plant 104c, and/or the entire process control environment 100. The controller 130 may be, for example, a DeltaV™ controller sold by Fisher-Rosemount Systems, Inc., an Emerson Process Management™ company. However, any other controller could be used instead. Further, while only one controller is shown in FIG. 1, additional controllers of any type or combination of types may be coupled to the plant bus 114.

The controller 130 may be coupled to a plurality of field devices 134a-c via a controller bus 136 and the I/O device 132. During execution of a process control routine, the controller 130 may exchange information (e.g., commands, configuration information, measurement information, status information, etc.) with the field devices 134a-c. For example, the controller 130 may be provided with a process control routine that, when executed by the controller 130, causes the controller 130 to send commands to the field devices 134a-c that cause the field devices 134a-c to perform specified operations (e.g., perform a measurement, open/close a valve, turn on/off a process pump, etc.) and/or to communicate information (e.g., measurement data) via the controller bus 136.

In the illustrated example of FIG. 1, the field devices 134a-c are Fieldbus™ compliant devices configured to communicate via the controller bus 13 6 using a Fieldbus™ protocol. However, the methods and apparatus described herein are not limited to the Fieldbus™ protocol and/or Fieldbus™ devices. Rather, field devices may include, without limitation, Profibus™ devices and/or HART-compliant devices that communicate via the controller bus 136 via Profibus™ and/or HART protocol(s).

The example process control system 124c is provided to illustrate one type of system within which the example methods and apparatus described in greater detail below may be advantageously employed. However, the example methods and apparatus described herein may, without limitation, be advantageously employed in other systems of greater or less complexity than the example process control system 124c shown in FIG. 1.

In the illustrated example of FIG. 1, the module 128a (Module A) is configured at the workstation 126 to define a process control routine to be executed by the controller 130 and/or the field devices 134a-c. The module 128a includes a plurality of function blocks 136a-d that define functions to be perfomed by the field devices 134a-c to implement the process control routine (e.g., a batch process, a phase of the batch process, a plurality of batch process phases to make a product, etc.). The function blocks 136a-d may cause the field devices 134a-c to acquire measurement values (e.g., pressure values, temperature values, flow values, voltage values, current values, etc.), perform algorithms or calculations (e.g., integrations, derivatives, additions, subtractions, etc.), control instrumentation (e.g., opening/closing valves, furnace adjustments, boiler adjustments, etc.), and/or to perform any other function(s).

The workstation 126 may also be used to configure other modules having one or more other function blocks (not shown) executed by the field devices 134a-c and/or the controller 130. Although multiple modules (the modules 128a-c) are shown, more modules may be configured at the workstation 126 having additional function blocks to be executed by the controller 130 and/or the field devices 134a-c. The other module(s) may be used to implement other process control routines (e.g., new process control routines related to alternate/additional product batches) and/or to implement a process control routine in connection with the modules 128a-c. Additionally, the example process control system 124c described above may be similar to other process control systems (e.g., 124a, 124b) within the plant 104a, and the plant 104a may be representative of additional plants (e.g., 104b, 104c) within the example process control environment 100.

Generally speaking, the example history client 120 may impart functionality to the workstation 126 (e.g., via an application-programming-interface (API) call/library) to allow a user (e.g., a system engineer, a process control engineer, a plant manager, etc.) to associate one or more function blocks (e.g., the function blocks 136a-d) with one or more batches of interest (e.g., a batch process that results in the fabrication/making of a product of interest). The example workstation 126 may facilitate a user interface (e.g., a graphical user interface, a command line interface, etc.) to execute the history client 120 functionality. Without limitation, user interface functionality may also be facilitated by the history client 120 and/or the history standardizer 110 via, for example, a web server. An example user interface may include an image of the module 128a and the four example function blocks 136a-d therein. The system engineer may select (e.g., via keystroke(s), mouse left/right clicks, etc.) a function block (e.g., the function block 136a (A1)) to associate the function block 136a with one or more keys and/or sub-keys.

For example, the function block 136a may include process control routines to fabricate a petroleum batch (product) of interest within the plant 104a. Similarly, a separate function block that executes in the plant (Plant C) 104c may also fabricate that same petroleum batch (product) at a separate time. However, to maintain consistency in the product of interest between the plant 104a and the plant 104c, one or more phases of the batch process for the petroleum product must stay within acceptable tolerances. Accordingly, the system engineer may select the function block 136a and associate a key thereto with a globally identifiable name, such as "petroleum." The history standardizer 110 receives the key so that other system engineers may, if desired, make similar associations for that same product in the other plants 104b and 104c. Additionally or alternatively, the system engineer and/or higher-level system manager may employ the intra-plant bus 102 to make similar associations with that same key (e.g., petroleum) at other plant locations 104b, 104c and their corresponding function block(s) that are responsible for making the example petroleum product.

During the manufacture of a particular batch for the petroleum product (e.g., the product associated with the key named "petroleum") in the plant 104a, the controller 130 executes as it normally would by, for example, controlling plant equipment and/or taking measurements. Such measurements may be stored in the data historian 118 without interruption by the history client 120, the local history database 122, the history standardizer 110, and/or the system history database 112. However, in addition to the normal data collection and/or storage functions of the example function block 136a, the history client 120 saves one or more process measurements of interest (i.e., data properties) and associates them with one or more keys before saving the measurements to the local history database 122. A key may include, for example, the name "petroleum" to represent that the measured parameter (e.g., a pressure, a temperature, a voltage, a viscosity, etc.) is associated with the fabrication of the petroleum product of interest.

One or more additional sub-keys may also be used when an entire batch process is not relevant and/or too complicated to review at one time. For example, a sub-key named "PK1" may be associated with only those measurements that occur during a first of many phases associated with the batch process executed to fabricate the petroleum product "petroleum." Similarly, another sub-key named "PK5" may be established and associated with a fifth phase of the batch process associated with product "petroleum." As a result, when a system engineer, plant manager, data analyst, and/or any other user associated with the process control environment 100 desires a better understanding of performance measurements of a specific phase for a specific batch process that results in the completed product, that user may simply refer to the global key "petroleum" to quickly extract measurements in one or more plants that manufactured the petroleum product of interest.

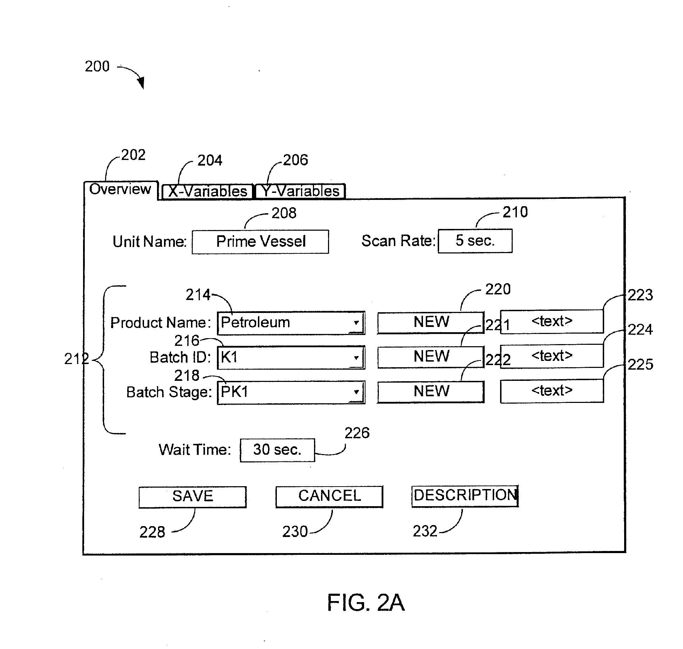

Now turning to FIG. 2A, an example user interface 200 that may be used to implement the example methods and apparatus described herein includes an overview tab 202, an x-variables tab 204, and a y-variables tab 206. In the illustrated example of FIG. 2A, in the event that the user (e.g., a system engineer, a plant manager, etc.) invokes the history client 120 services, the user interface 200 may appear for configuration and/or modification. Generally speaking, the overview tab 202 allows the user to create one or more keys and/or associate one or more keys with a function block. The x-variables tab 204 and the y-variables tab 206, discussed in further detail below, allow the user to specify which data properties of interest are obtained from execution of the associated function block. A data property as described herein may include a raw measurement value, a status of one or more pieces of process control equipment (e.g., whether a valve is open/closed, whether a pump is on/off, etc.), and/or a calculated measurement. For example, a calculated measurement may include, but is not limited to, a transducer that provides a scaled voltage output value. The scaled output voltage (e.g., voltage values between 0-5 volts) may be proportionally related to a physical attribute of the system, such as a pressure, a flow-rate, etc.

The overview tab 202 includes a unit name field 208, a scan rate field 210, and key configuration fields 212. In the illustrated example of FIG. 2A, the key configuration fields 212 include a product name key field 214, a batch identification (batch ID) field 216, and a batch stage field 218, each of which allow the user to enter and/or view path information for the corresponding key. The keys facilitate, in part, mapping of one or more data properties of interest selected and/or configured in the x-variables tab 204 and/or the y-variables tab 206. For example, while a PCS may control one or more pieces of equipment, one or more sensors, and/or obtain measurements to be saved in the data historian, the history client 120 may also obtain the same, additional, and/or alternate measurements related to the PCS and save them to the local history database 122. Unlike the data stored in the traditional data historian 118, the data stored in the local history database 122 includes the keys and/or sub-keys and associated measurements identified within the x-variables tab 204 and/or the y-variables tab 206. In some instances, the unit name 208 may be particularly well suited as a key (e.g., a primary key) because, in part, the unit name 208 may uniquely identify one or more pieces of equipment used during batch processing. The equipment (one or more pieces of equipment and/or system(s)) used in any particular batch operation may exhibit unique operating characteristics that may not be similar to other equipment in the same and/or geographically separated plant(s). As such, development of PCA and/or PLS models perform better in view of the one or more unique nuances associated with the unit name 208. Regardless of whether the unit name 208 is employed as a (primary) key, or whether a key is selected from the configuration field(s) 212 , rather than merely storing the measurements and associated timestamp information, as is typically the case in the traditional data historian 118, the history client 120 associates one or more of the keys 214, 216, and 218 from the key configuration fields 212, and/or the unit name 208 with the saved data parameters.

The user of the history client 120 may create one or more new keys to associate with one or more data parameters of interest (e.g., via editing of the x-variables tab 204 and/or the y-variables tab 206, as discussed in further detail below), and/or select one or more existing keys that have been configured at a previous time. For example, keys created at a previous time may be the result of a system engineer's efforts at a remote plant (e.g., the plant 104b, the plant 104c, etc.) who associated one or more function blocks and associated data properties with a product (e.g., a batch process for petroleum product "petroleum"). As a result, because each of the plants 104a-c includes a respective history client and associated local history database, each such history client (e.g., the history client 120 of FIG. 1) transmits key configuration fields designed by a system engineer to the history standardizer 110. When the system engineer within any particular plant (e.g., the plant 104a) invokes its corresponding history client (e.g., the history client 120), that history client queries the history standardizer 110 via the plant bus 114 and the intra-plant bus 102 to receive a complete list of known key profiles that may be employed. In this manner, overall configuration efforts are minimized by other system engineers at other plants when associating data properties of interest with any particular product (e.g., petroleum), any particular batch of the product of interest (e.g., batch "K1"), and/or any particular phase of the batch of interest (e.g., phase "PK1").

In the event that the user (e.g., a system engineer) desires to create one or more new keys, example 'new' button(s) 220, 221, and 222 are provided on the example user interface 200 adjacent to text field(s) 223, 224 and 225 that allow user entry of alpha-numeric characters. For example, the user may be a quality control engineer chartered with a responsibility to monitor and/or study the consistency of an alternate product (e.g., a different petroleum product, a different petroleum blend, etc.). The user types-in a new string for any one of the key configuration fields 212 and selects the corresponding one of the 'new' button(s) 220, 221, 222 to establish that new key name(s) as a primary and/or secondary key. Any other key names added by the user become sub-keys (secondary keys) that may further narrow a subsequent search of saved data properties in the local history database 122 and/or the system history database 112.

For example, the product "petroleum" may be the result of five separate phases performed by the process control system 124c shown in FIG. 1. That is, phases "PK1," PK2," "PK3," "PK4," and "PK5" may result in complete fabrication of the product referred-to as "petroleum." The quality control engineer may assign "petroleum" as the primary key, but also include a secondary key named "PK3" so that data properties of interest are specific to only that identified phase. Although the examples described herein have included three example keys within the key configuration fields 212 for a petroleum-based product, any number of keys may be employed by the example history client 120 and the history standardizer 110 for any industry and/or any product made by such industry.

In the illustrated example of FIG. 2A, the user interface 200 also includes a wait time field 226, a save button 228, a cancel button 230, and a unit description button 232. The example wait time field 226 instructs the example history client 120 to delay parameter measurements by the specified time period entered in the field 226. For example, initial conditions for manufacturing a product of interest (e.g., petroleum), or a batch of interest (e.g., "K1"), and/or a particular phase of interest within the batch (e.g., "PK3") may include set-up transient conditions that are expected, yet have no redeeming value to the user. Temperatures for thermocouples may be, for example, changing substantially because the process control equipment is preparing for the process by raising/lowering temperatures, filling production vessels, etc. The save button 228 allows the user to save a newly generated and/or edited key profile to the history client 120, and the cancel button 230 allows the user to cancel such activities without saving and/or overwriting a previously saved profile.

The unit description button 232 may be particularly useful for users that opt to employ a profile previously created. Selection of the unit description button 232 may cause a dialog box, text field, text document, etc., to appear that explains one or more facets of the pre-configured key profile. For example, the text document may describe who created the profile, and/or what the configured keys are meant to represent (e.g., batch "K1" of product "petroleum" is to be sold only to clients in Chicago in view of emissions regulations). The text document may also describe which parameters have, to date, been monitored via the one or more keys of interest.

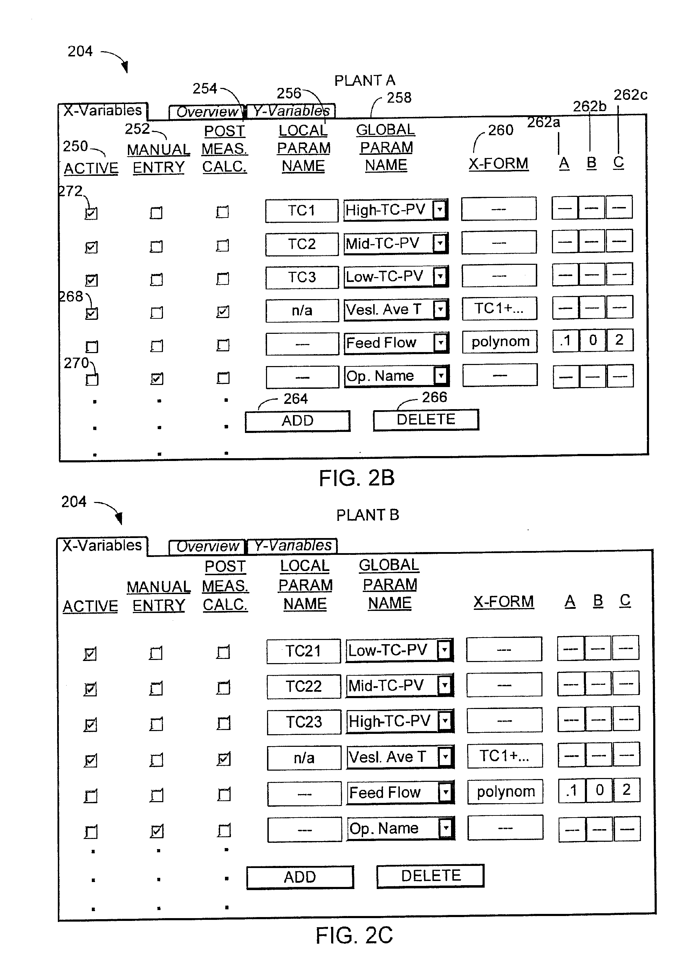

Now turning to FIG. 2B, the example x-variables user interface 204 includes an active column 250, a manual entry column 252, and a post measurement calculation column 254, each of which includes user selection boxes. Additionally, the example x-variables user interface 204 includes a local parameter name column 256, a global name parameter column 258, a transform column 260, and transform constants columns 262a-c. In the event that the user desires to add new data properties to monitor and/or study, or delete existing data properties, the example user interface 204 includes an add button 264 and a delete button 266, respectively. Each row of the x-variables user interface 204 represents one data property of interest that the user may configure and/or delete. Assuming that the user configures a new key and/or sub-keys, the example x-variables user interface 204 includes a number of rows that are equal to the number of available sensors of which the function block is aware. Additionally or alternatively, the number of rows may be pre-populated with sensors, switch status indicators, and/or transducers with which the example controller 130 may interface. Accordingly, the user need not consume time searching for process control equipment that may be of interest, but may, instead, select the corresponding user selection box under the active column 250 to indicate a desire to measure that equipment (e.g., a thermocouple, a flowmeter, etc.). If selected, the corresponding row represents a data property of interest that will be associated with the primary key and any secondary keys configured in the user interface 200.

Generally speaking, the local parameter name column 256 and the global parameter name column 258 allow resolution of dissimilar parameter nomenclature among one or more plants of the example process control environment 100. In the event that a PCS of two or more plants includes essentially the same equipment used to manufacture a product, it is less likely that both PCSs will employ the exact same nomenclature for the one or more pieces of equipment that comprise the PCSs. For example, one PCS may employ the nomenclature "TC1," "TC2," and "TC3" to refer to a top thermocouple, a middle thermocouple, and a bottom thermocouple of a vessel, respectively. On the other hand, another PCS may also employ a vessel to make the same product, but employ the terms "TC21," "TC22," and "TC23" to refer to a bottom thermocouple, a middle thermocouple, and a top thermocouple of a similar vessel, respectively. Continuing with this example, the user at plant 104a would be presented, upon access to the x-variables user interface 204, with at least three rows in the local parameter name column 256 that recite "TC1," "TC2," and "TC3." The user would then be permitted to associate each of these local parameter names with global parameter names in the global parameter name column 258 via drop-down selection boxes. For a row (272) associated with "TC1," the global parameter name may be selected as "High TC-PV" to represent the globally referenced concept of the highest thermocouple of the primary vessel that manufactures the product of interest.

On the other hand, an alternate plant (e.g., plant 104b) may present the user with the example x-variables user interface 204 as shown in FIG. 2C. In particular, the example user interface 204 of FIG. 2C includes rows for each of "TC21," "TC22," and "TC23," which refer to global parameter names "Low TC-PV," "Mid TC-PV," and "High TC-PV," respectively. Despite local parameter nomenclature differences between Plant A (as shown in FIG. 2B) and Plant B (as shown in FIG. 2C), the global parameter nomenclature remains accurate when measuring and storing data from thermocouples located at high, medium, and low points of a primary vessel.

Custom data properties may be added to the profile via the add button 264, such as a property indicative of a combination of individual measurements. For example, a custom property of average vessel temperature 268 may be the result of temperature measurements of three separate thermocouples over a predetermined amount of time (e.g., the total time during which the function block executes its instructions). To indicate that the average vessel temperature 268 is to be calculated after completion of a phase and/or sub-phase, the user selection box associated with the post measurement calculation column 254 is selected. Notice that, because the example average vessel temperature 268 data property is a custom creation by the system engineer, no corresponding data resides in the corresponding local parameter name column 256, as discussed in further detail below. The custom parameter for average vessel temperature 268 also includes a corresponding formula, shown in the transform/formula/script column 260. Transformations, such as logarithmic transformations (LOG), natural log (LN) transformations, and/or polynomial transformations may be configured via one or more formulae in the transform column 260. Additionally or alternatively, operations to be performed in view of the data property of interest may refer to one or more scripts, such as script code stored in a memory. For example, well-known formulae are applied to raw thermocouple output signals in view of nonlinear responses to temperature and the corresponding output voltage of the thermocouple. Transform constants may be employed by entering constant values for the corresponding one of the columns 262a-c, if desired. As another example, a custom property may require manual entry by, for example, a plant operator, a plant manager, etc. An example operator name property 270 includes a checked selection in the manual entry column 252, which is indicative of an operator name, as shown in the global parameter name column 258.

Each of the PCSs within a plant, and/or each plant within the processing control environment 100 may employ one or more data historians and/or other database storage facilities. Such data may be stored for inventory control, quality control, product tracking, etc., and may be stored in a manner that requires data formatting consistency. For example, programs, scripts, and/or other programs may access the traditional data historian(s) to decompress, extract, and calculate values to support legacy reporting systems. However, the methods and apparatus described herein employ the history client 120, the local history database 122, the history standardizer 110, and the system history database 112 in a manner that does not disrupt such legacy reporting systems.

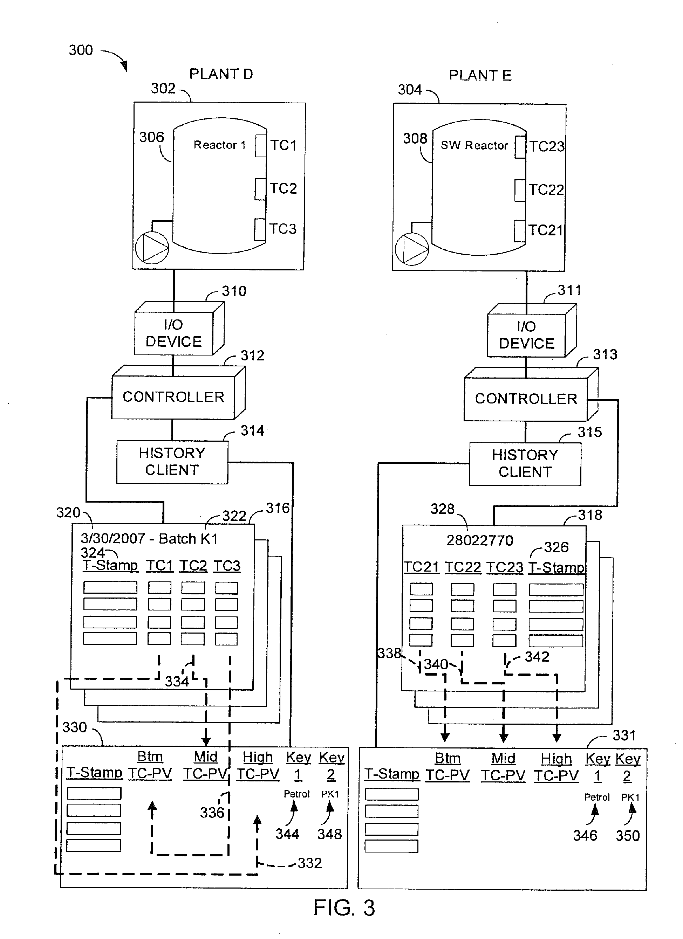

Turning now to FIG. 3, a partial view of two example PCSs 300 for a first plant 302 (Plant D) and a second plant 304 (Plant E) are shown. Plant 302 (Plant D) includes a vessel 306 (named "Reactor 1 ") and three thermocouples to measure batch temperatures at a high location ("TC1"), a midpoint location ("TC2") and a low location ("TC3"). Similarly, plant 304 (Plant E) also includes a vessel 308 (named "SW Reactor") and three thermocouples to measure batch temperatures at a high location ("TC23"), a midpoint location ("TC22"), and a low location ("TC21"). As described above in view of FIG. 1, the PCSs of the plant 302 and the plant 304 employ I/O modules 310 and 311 and controllers 312 and 313 to interface and control sensors, transducers, and/or other PCS equipment. The plant 302 includes a history client 314 and the plant 304 includes a history client 315, each of which may include a corresponding local history database and connectivity to the history standardizer 110 via one or more networks. As described in further detail below, the history clients 314 and 315, in part, associate parameters of interest in a manner that resolves individual nomenclature inconsistencies of the plants 302 and 304.

In the illustrated example of FIG. 3, the plant 302 stores process data in one or more datafiles 316, which may be a data historian. Similarly, the plant 304 includes one or more datafiles 318. Both of the datafiles 316 and 318 may store data in a particular manner to suit the needs of the system engineer and/or plant manager that configured the PCS within that plant. For example, the datafiles 316 of the plant 302 store batch data with a month/day/year format 320 and a batch-name 322. Each measured value of the example datafile 316 includes a timestamp 324, and columns for measured values for TC1, TC2, and TC3. As described above, one or more legacy applications may refer to the datafile 316 and depend upon the data being arranged in this specific format. Other legacy systems may depend on the datafile 318 for the plant 304, which arranges data in a manner unlike the datafile 316 associated with the plant 302. In particular, the datafile 318 associated with the plant 304 includes columns for, in the specific order TC21, TC22, TC23, and a timestamp column 326. Additionally, the datafile 318 includes an eight-character identifier 328 without any indication of the batch, the product, or the phase of the batch being measured.

Although the reactors 306 and 308 are, for all suitable purposes, the same type of vessel having thermocouples placed in similar locations, the datafiles 316 and 318 associated with those thermocouples do not exhibit nomenclature parity. As such, in the event a user (e.g., an analyst) desires to compare the batch process between these two plants when making the same product, additional time-consuming investigation and/or research is (using known techniques) typically necessary to determine that TC1 is essentially the same as TC23, and that the reactor 306 is essentially the same as the reactor 308. However, the history clients 314 and 315 facilitate, in part, a method and apparatus to yield standardization, tracking, and storage parity among data properties of interest for process control environment procedures that occur at different times and/or at different plants within the process control environment 100.

Both the history client 314 and history client 315 employ a primary key "petroleum" and a secondary key "PK1" (e.g., to refer to a first phase of the production for the product "petroleum"). Each of the system engineers associated with the plant 302 and the plant 304 may have selected the primary key "petroleum" and made associations between the local parameter names and global parameter names as described in connection with FIGS. 2B-2C. As such, each of the history clients 314 and 315 causes its respective one of the controllers 312 and 313 to acquire a measurement from the respective PCSs and save it to a respective one of local history database(s) 330 and 331. Additionally or alternatively, each of the history clients 314 and 315 may take the same measurement values that occur as a result of normal function block execution to minimize additional controller processing demands and/or I/O bandwidth limitations. However, in either case, the history client 314a and/or 314b reconciles the localized nomenclature so that it is mapped to the global parameter names associated with the selected profile (e.g., the profile for primary key "petroleum").

As shown in the illustrated example of FIG. 3, a first dotted arrow 332 represents maping of measurements associated with TC1 directly to the global parameter name "High TC-PV," a second dotted arrow 334 represents mapping of measurements associated with TC2 directly to the global parameter name "Mid TC-PV," and a third dotted arrow 336 represents mapping measurements associated with TC3 directly to the global parameter name "Bottom TC-PV" for the plant 302. Similarly, a fourth dotted arrow 338 represents mapping of measurements associated with TC21 directly to the global parameter name "Bottom TC-PV," a fifth dotted arrow 340 represents mapping of measurements associated with TC22 directly to the global parameter "Mid TC-PV," and a sixth dotted arrow 342 represents mapping of measurements associated with TC23 directly to the global parameter name "High TC-PV" for the plant 304. Such mapped parameter values are also immediately associated with the primary key via a primary key column 344, 346 and/or any secondary key(s) via a secondary key column 348, 350, if any, of the local history database(s) 330 and 331.

Upon completion of data acquisition related to the function block associated with, for example, production of one phase for the petroleum product, the measured data from the local history database(s) 330 and 331 is sent to the history standardizer 110 and saved in the system history database 112. Additionally, the history standardizer 110 may append additional information related to an instance of data received from each local history database within the process control environment 100. For example, the history standardizer 100 may append information to each measurement sample to indicate which plant the measurement came from, which PCS the measurement came from, the localized equipment name to which the measurement is associated (e.g., "Reactor 1"), and/or the localized parameter name used by the PCS. As used herein, an instance of data may reflect a logical subgroup of datapoints associated with the primary key, or a combination of datapoints associated with a combination of the primary key and one or more secondary keys. To illustrate, a first instance of data received from the local history database may be a group of measurements of TC1 spanning several minutes during phase PK1. However, if the process plant does not produce the product associated with phase PK1 for several months, the second instance of grouped data points may have timestamps much later in time. Nonetheless, the first instance and the second instance of data may be plotted and/or otherwise compared to each other by searching the system history database 112 for the occurrence of measurements having both of the keys "petroleum" and "PK1." While the aforementioned example illustrates comparisons of phases for a single plant, in which those phases are separated in time, the methods and apparatus described herein are not limited thereto. For example, instances of phase PK1 for multiple plants may be found within the system history database 112 and extracted for comparisons to each other. Such comparisons may expose, for instance, inconsistencies between equipment control of the one or more processing plants 104a-c.

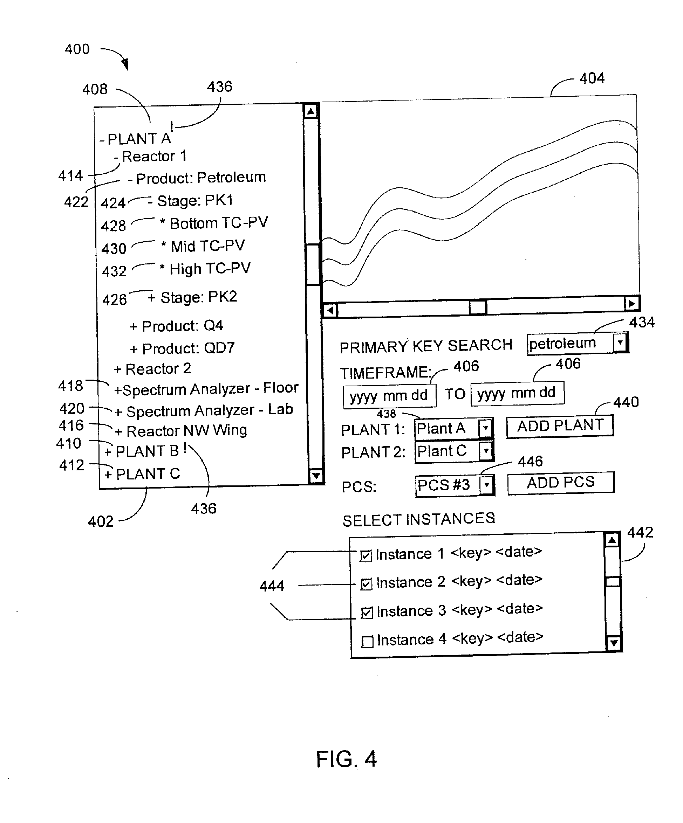

Now turning to FIG. 4, an example property evaluation graphical user interface (GUI) 400 that may be used with the example methods and apparatus described herein includes an explorer window 402, a plotting window 404 and timeframe selector fields 406. The example explorer window 402 provides the user with a visual map relating to details of the process control environment 100, such as one or more plants, the equipment located in each plant, and data properties of interest within the process control environment 100. In the illustrated example of FIG. 4, the explorer window 402 includes high-level tags grouped by plant (PLANT A 408, PLANT B 410, PLANT C 412). Each high-level tag, when expanded by the user (e.g., clicking on the "+" symbol with a mouse), logically expands to expose additional detail about the selected plant(s). For example, a next logical tag may include specific process control equipment (e.g., a vessel, a tank, an oven, etc.) that operates in the plant. In the illustrated example of FIG. 4, the explorer window 402 includes a "Reactor 1" tag 414, a "Reactor NW Wing" tag 416, a "Spectrum Analyzer-FL" tag 418, and a "Spectrum Analyzer-Lab" tag 420. In the event that the user expands the PLANT B tag 410 and/or the PLANT C tag 412, a similar expansion of logical description will appear in the explorer window 402.

Additional logical tags are shown in the example user interface 400 of FIG. 4, which include further detail relating to primary keys and sub-keys. A product key for "petroleum" 422 illustrates associated sub keys "PK1" 424 and "PK2" 426. Furthermore, the sub key "PK1" 424 is expanded to illustrate associated property values of interest, namely "Bottom TC-PV" 428, "Mid TC-PV" 430, and "High TC-PV" 432. As discussed in further detail below, if the user desires to track one or more data properties of interest, the user may select such properties from the explorer window 402 (e.g., via mouse click(s)). Accordingly, the selected properties will be plotted for the user in the plotting window 404 for the time period chosen via the timeframe selector fields 406.

The user may determine which plants, which PCSs, and/or which process control equipment is associated with a key by using a primary key search field 434. For example, if the user knows that "petroleum" is a key associated with a profile that tracks one or more data properties of interest related to manufacture of the petroleum product, then selecting "petroleum" from the key search field 434 will indicate one or more explorer window tags related to that key. Key indicators may be illustrated to the user in any manner, such as by use of an exclamation point ("!") 436 shown as a superscript next to the PLANT A tag 408 and the PLANT C tag 412.

Properties of interest may also be plotted by specifying one or more plants of interest via a plant selection field 438. However, if the user is interested in properties associated with a primary key beyond a single plant, then the user may expand the analysis by selecting an 'Add Plant' button 440, which may provide the user with another plant selection field. As a result, the user may identify, initially, a key that satisfies a research need (e.g., the "petroleum" key will expose whether consistency issues in the first phase of one or more plants are causing customer complaints). Next, the user may specify a timeframe for any instances of collected data associated with the primary key (i.e., "petroleum") and a selected plant (e.g., PLANT A). A resulting list of property instances will be displayed to the user in an instances field 442. In the illustrated example of FIG. 4, the instances field 442 displays at least three available instances for the selected timeframe range (more may be accessed by the user by scrolling-down the instances field 442). If the user desires to compare these properties to each other (e.g., by displaying a performance graph in the plotting window), selection boxes 444 may be checked (e.g., via mouse click, keyboard navigation, touchscreen input, etc.). Each occurrence of a property instance also includes a date on which that property data was measured.

The user may further narrow-down the list of property instances by selecting one or more PCSs within the selected plant to examine. In particular, because each plant may have many PCSs, each of which may include many pieces of process control equipment, and each of which may include multiple modules and function blocks, a PCS selection field 446 allows a more focused analysis of a complex control environment. Briefly returning to FIG. 1, the example plant 104a includes the three PCSs 124a-c. If the user selects "all" from the PCS selection field 446, then all instances for the key "petroleum" associated with the selected plant(s) will be presented to the user in the instances field 442. However, if the user selects "PCS #3" from the PCS selection field 446, then only such instances for the key "petroleum" associated with the PCS 124c (see the example plant 104a of FIG. 1) for the selected plant will be available to the user.

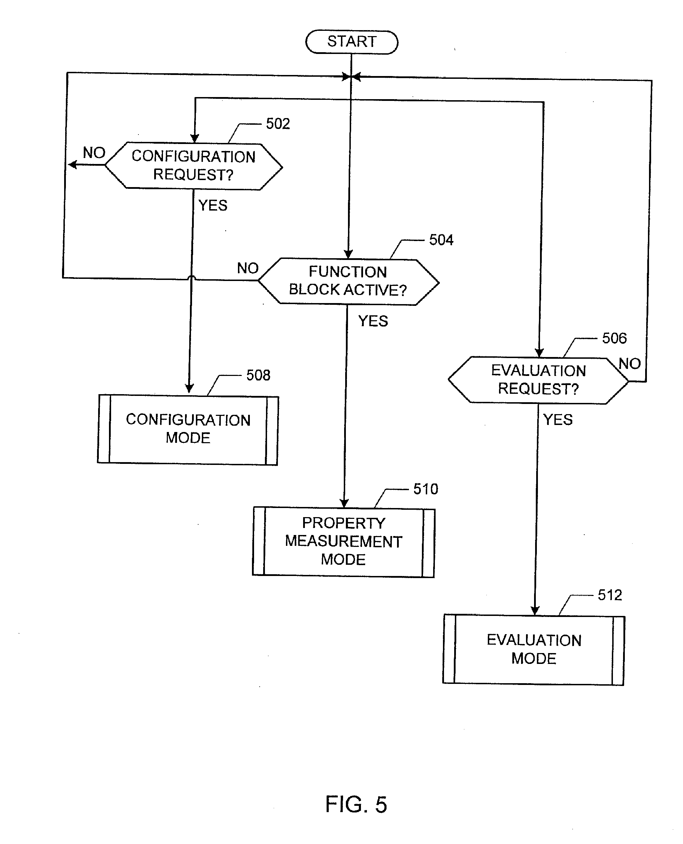

FIGS. 5-8 are flowcharts of example methods that may be used to implement the example apparatus of FIGS. 1-4. In some example implementations, the example methods of FIGS. 5-8 may be implemented using machine readable instructions comprising a program for execution by a processor (e.g., the processor 912 shown in the example processor system 910 of FIG. 9). The program may be embodied in software stored on a tangible medium such as a CD-ROM, a floppy disk, a hard drive, a digital versatile disk (DVD), or a memory associated with the processor 912 and/or embodied in firmware and/or dedicated hardware in a well-known manner. Further, although the example program is described with reference to the flowcharts illustrated in FIGS. 5-8, persons of ordinary skill in the art will readily appreciate that many other methods of implementing the example apparatus of FIGS. 1-4 may alternatively be used. For example, the order of execution of the blocks may be changed, and/or some of the blocks described may be changed, eliminated, or combined.

Turning to FIG. 5, in an example method for standardizing data properties, the history client 120 may respond to at least three requests including, but not limited to, a configuration mode, a property measurement mode, and an evaluation mode. As described above, the history client 120 may communicate with one or more PCSs, such as the PCS 124c shown in FIG. 1, and/or the history client 120 may include a library of functions to be executed by the workstation 126 within each PCS of interest. In any event, the history client 120 monitors for a user's request for key configuration (block 502), monitors for a function block that is associated with a key profile (block 504), and monitors for a user's request for property evaluation (block 506). If the user selects the configuration request (block 502), then control advances to a configuration mode (block 508). If the history client 120 detects that a function block is executing that is also associated with a key profile (block 504), then control advances to a property measurement mode (block 510). If the user selects an evaluation request (block 506), then control advances to an evaluation mode (block 512). Each of the configuration mode (block 508), the property measurement mode (block 510), and the evaluation mode (block 512) are discussed in further detail below.

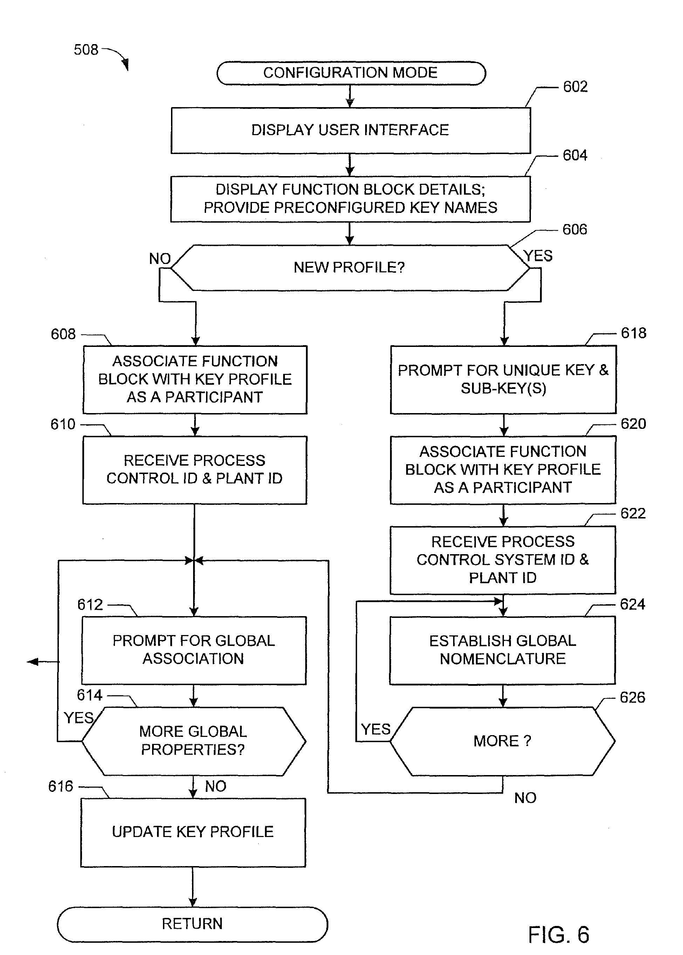

FIG. 6 illustrates an example method to implement the configuration mode (block 508), which, when selected by the user, causes the history client 120 to display a user interface for the user (block 602). As discussed above, a user may configure a key profile and/or associate a selected function block with one or more keys via the example user interface 200, 204, and 206 shown in FIGS. 2A-2C. The example user interfaces 200, 204 and 206 may be facilitated through the workstation 126 as an API and/or library calls, or the example user interfaces 200, 204, and 206 may be facilitated by way of an intranet and/or Internet connection via a web browser. In the event that the example user interface is facilitated by way of a web browser, the example history client 120, history standardizer 110, and/or the workstation 116 may include a web server (not shown).

The user is presented with the user interface, such as the example user interface 200 shown in FIG. 2A, having displayed thereon default information and one or more opportunities to modify property measurement behavior. For example, the history client 120 causes the example user interface 200 to display a unit name 208 associated with the selected function block and/or a function block identifier (e.g., a function block name) (block 604). Additionally, the history client 120 populates the product name key field 214 with names of keys previously configured within the process control environment 100 (block 604). Awareness of keys that have been configured by one or more users (e.g., system engineers, plant managers, data analysts, etc.) may occur as a result of a scheduled and/or periodic update of available key profiles from the history standardizer 110, which may store such key profile information in the system history database 112. Information related to previously configured key profiles may be retrieved in greater detail by the user after selecting the unit description button 230 after selecting one key from the product name key field 214 drop-down list. As described above, the unit description button 232 may include narrative information by the creator/designer of the key profile, which may explain motivation(s) to create the profile, which properties are monitored by the profile, when the profile was created and/or contact information of the creator/designer of the key profile. Additionally or alternatively, the key profile may be configured so that others may, or may not participate by associating additional PCSs and/or function blocks with the key profile.

Based on the information related to previously created key profiles (block 604), the example user interface 200 facilitated by the history client 120 allows the user to participate with an existing key profile or create a new key profile (block 606). If the user desires to associate the selected function block with an existing key profile (block 606), then the history client 120 associates the selected function block with the existing key profile by marking the function block as a participant (block 608). Additionally, the history client 120 acquires other specific details about the newly added participant (block 610) including, but not limited to, the PCS identification (e.g., the PCS 124c), the plant identification (e.g., the plant 104a), the function block identification (e.g., the function block 136a), the module information (e.g., the module 128a), and/or the date on which the selected function block was associated with the key profile.

Each function block associated with the key profile may employ sensor and/or property nomenclature that is different than other function blocks, despite the fact that such other function blocks may essentially perform the same function(s). Similarly, the global parameter names associated with the selected key profile are likely to be different than local parameter names for each function block. Accordingly, the user interface 200 facilitated by the history client 120 prompts the user to associate global parameter(s) with local parameter(s) (block 612), as described above in connection with FIG. 2B. In other words, the local parameters that are monitored, measured, and/or otherwise controlled during local function block execution are mapped to the globally identified parameter nomenclature associated with the selected key profile (block 612). As a result, when local parameter measurements are saved to the local history database 122 and/or the system history database 112, they are referenced by a common global nomenclature so that subsequent data analysis does not require that the user consult look-up tables and/or otherwise cross-reference local nomenclature differences. Multiple associations between local and global parameter names may occur until all local parameters of the selected function block are accounted for (block 614). The example history client 120 updates the key profile to acknowledge the new participant (e.g., the new function block) by saving such profile information in the local history database 122 (block 616). As described above, the history client 120 may update the history standardizer 110 with newly modified key profiles on an immediate, scheduled, and/or periodic basis.

In the event that the user desires to create a new key profile (block 606), then the history client 120 prompts the user for a unique key name (block 618). As described above in view of the example user interface 200 of FIG. 2A, the new button(s) 220, 221, or 222 and associated text field(s) 223, 224, or 225 allows the user to enter a new primary key name(s). Although the example user interface 200 described in connection with FIG. 2A illustrates a primary key related to a product name, persons having ordinary skill in the art will appreciate that primary keys and one or more sub-keys may, additionally or alternatively, be related to any other category and/or facet of interest. For example, industries relating to circuit board manufacturing may refer to a primary key as a "circuit assembly" rather than "product name," as shown in FIG. 2A.

The newly created key profile is referenced initially by the new primary key (e.g., typed in the text field(s) 223, 224, and/or 225), and may be further referenced by one or more secondary keys (e.g., one or more sub-keys entered into associated text fields 223, 224, or 225) (block 620). For example, because the example primary key named 'petroleum' may include one or more unique batch variations (e.g., K1, K2, etc.), the key profiles created by one or more users may be referred to as a logical combination of a primary key with one or more sub-keys. To illustrate, a petroleum product for batch type K1 may be referred to using a profile name "petroleum/K1," while a petroleum product for batch type K2 may be referred to using a profile name "petroleum/K2." Furthermore, if each batch type includes many phases of operation during manufacture, then more specific batch profiles may be established to study such specific phases of interest, such as "petroleum/K1/PK1," "petroleum/K1/PK3," etc. The history client 120 acquires other specific details about the newly added participant of the new key profile (block 622) including, but not limited to, the PCS identification (e.g., the PCS 124c), the plant identification (e.g., the plant 104a), the function block identification (e.g., the function block 136a), the module information (e.g., the module 128a), and/or the date on which the selected function block was associated with the new key profile.

The user interface 200 facilitated by the history client 120 prompts the user to establish one or more global parameters and/or establish a profile description that may be helpful to subsequent users considering participating with the key profile (block 624). Each global parameter name, such as, for example, "Bottom TC-PV" may be described by the user in the profile description as a thermocouple located within four inches of the bottom of a primary vessel that fabricates petroleum blend "K1." As such, future users of the key profile will better understand how to identify the proper local parameter (e.g., "TC3" is located 2-inches from the bottom of the vessel) before associating it with the global parameter of the key profile. Multiple global parameter names may be created in an iterative manner, as needed (block 626).

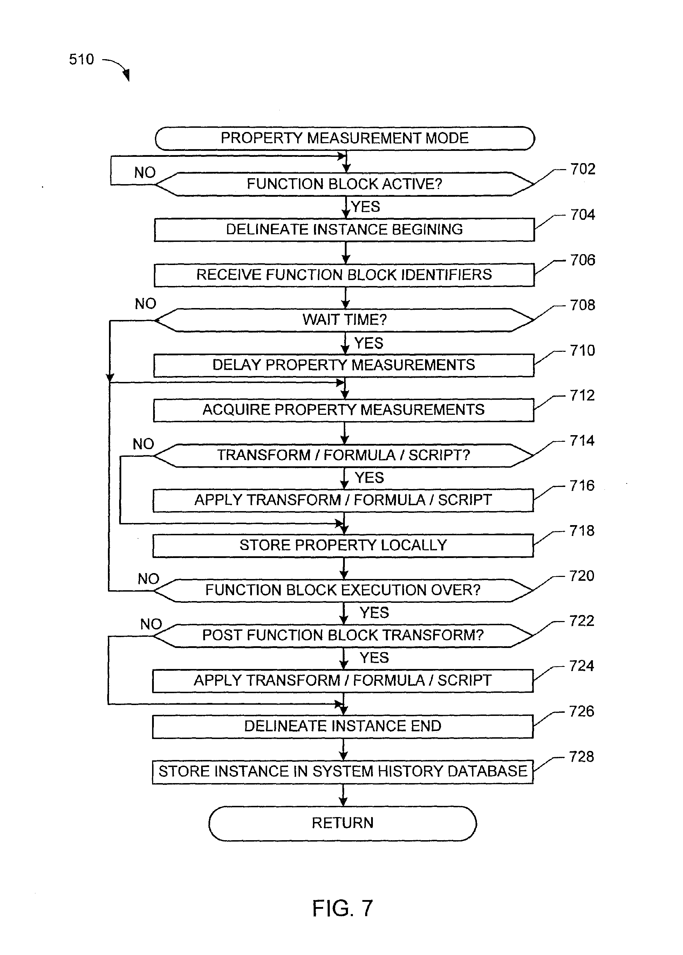

Turning to FIG. 7, an example method to implement the property measurement mode 510 is shown. In the illustrated example of FIG. 7, the history client 120 monitors for function block activity for function blocks that have an associated key associated therewith (block 702). If a function block begins execution, and the function block also includes an associated key profile (block 702), then the history client 120 delineates an instance beginning of the key profile with a timestamp (block 704). As discussed in further detail below, after each function block (that is also associated with a key) completes, the measured data properties during that execution are associated with an instance. Each instance (e.g., an occurrence) of the function block may be subsequently studied to determine, for example, deviation(s) in property values (e.g., temperature values, pressure values, values exceeding thresholds, etc.) as compared to previous and/or subsequent instances of that function block execution. The history client 120 receives identification information from the function block, such as PCS identification information (e.g., the PCS 124c) and/or module information (block 706). Before the history client 120 saves property data to the local history database 122, the history client 120 determines if the profile associated with the executing function block includes a wait time (block 708), such as a wait time value entered in the wait time field 224 of the example user interface 200 of FIG. 2A. If so, the history client 120 delays parameter measurement activity for the identified time-period (block 710). Delays may be desirable because, for example, the PCS associated with the executing function block is in a state of significant transition in which sensors do not reflect meaningful data worthy of saving.

The history client 120 acquires property measurements (block 712) by, for example, extracting a copy of the measurements taken by the controller 130 during normal execution of the function block. In this manner, the example history client 120 does not burden the controller 130 with additional and/or alternate control commands to obtain additional and/or alternate measurements. On the other hand, the history client 120 may instruct the controller 130 to perform additional and/or alternate commands that, for example, result in additional and/or alternate measurements to be taken. Any instructions to the controller 130 not associated with the history client 120 are not affected and/or altered. For example, the controller 130 may continue to acquire and store measurement data and/or control equipment functionality and save such measurements to the data historian 118 without interruption by the history client 120. However, some of the same measurements that are saved to the data historian 118 may also be saved by the history client 120 to the local history database 122.

Additionally or alternatively, other measurements in addition to and/or instead of those normally acquired by the controller may be requested by the history client 120 by virtue of the key profile associated with the executing function block. The history client 120 determines whether acquired measurements require application of a transform, a formula, and/or a script (block 714) and such transforms, formulas, and/or scripts may be performed on-the-fly (block 716). Acquired measurements, whether raw data (e.g., direct values from a transducer) or data calculated with a transform, a formula, and/or a script (e.g., a formula to calculate a pressure based on a scaled raw voltage) are stored to the local history database 122 (block 718). The history client 120 continues to monitor the function block to determine if it has completed execution (block 720). If not, control returns to block 712, otherwise the history client 120 determines whether the key profile associated with the function block requires additional and/or alternate transform calculation, formula calculation, and/or script calculation (block 722) after the data from the function block has been acquired and saved. For example, an average value for a property cannot typically be determined until a complete sequence of data samples is acquired. Such post-function block execution transforms, formulas, and/or scripts are calculated (block 724) and the end of the instance is delineated with a corresponding end timestamp (block 726). The instance of data may be stored in the local history database 122 and/or in the system history database 112 (block 728).

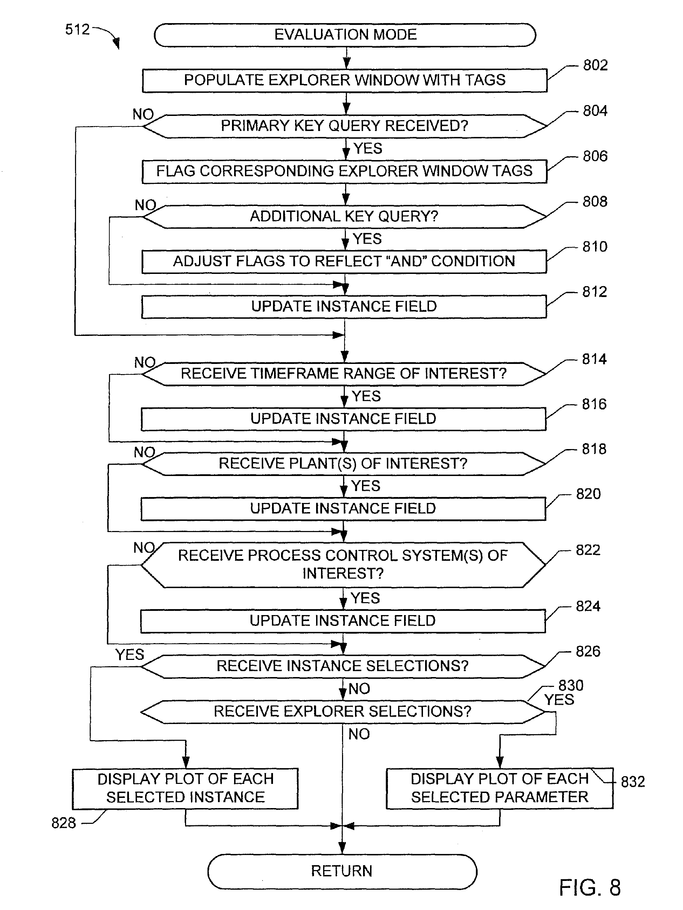

Turning to FIG. 8, an example method for the property evaluation mode 512 is shown. In the illustrated example of FIG. 8, the history client 120 displays the property evaluation GUI 400 and populates the explorer window 402 with high-level tags (block 802). Evaluation of the properties associated with one or more keys may be facilitated in any number of ways. Accordingly, the manner of evaluation illustrated in the example evaluation mode 512 of FIG. 8 and the example property evaluation GUI 400 are not to be construed as limiting, rather the description herein is merely one example that may be realized by the example methods and apparatus to standardize data properties in a process control environment.

The history client 120 determines if the user has identified a primary key query (block 804), which allows the user to focus the evaluation of data properties. If so, the history client 120 identifies one or more tags with a flag to indicate that tag expansion will include one or more sub-tags that are associated with the primary key (block 806). The flag indicators may include, but are not limited to, a superscript character next to the tag (e.g., an exclamation point ("!"), bold text, italicized text, etc.). The user may identify additional sub-keys to further constrain the evaluation (block 808), and the history client 120 will further adjust the flags associated with one or more tags to reflect only those tags that have both the primary key and the one or more sub-keys identified by the user (block 810). In addition to applying flags to one or more tags as an indication of matching evaluation parameters, the instances field 442 of the example GUI 400 is updated (block 812) to provide a list of instances matching the search criteria (e.g., only such instances of parameter data associated with both the primary key and the secondary key).

Instead of, or in addition to constraining the evaluation in view of a selected primary key query (block 804), the history client 120 determines whether the user has specified a timeframe range of interest (block 814), and updates the instances field 442 accordingly (block 816). If no such time-based constraint is provided (block 814), then the default timeframe includes all available instances in view of one or more other constraints provided by the user. Such other constraints may include, but are not limited to, receipt of one or more plants of interest (block 818), such as only those instances associated with, for example, the plant 104a. Without limitation, one or more plants identified by the user may be logically ANDed together so that only those instances associated with a selected primary key and/or timeframe will appear in the updated instances field (block 820). Additionally, the history client 120 may receive one or more PCSs of interest (block 822) to use as a constraint on the evaluation of data properties associated with one or more keys. Only such instances that are also associated with the selected PCSs will be displayed in the instances field 442 (block 824).

The history client 120 determines whether the user has selected any of the instances within the instances field 442 (block 826) and displays a plot of such instances in the plotting window 404 (block 828). For example, the selected instances may include data property measurements from a first and second instance, each separated by moments in time when such batches were manufactured. Additionally or alternatively, the user may select instances that compare instances between batches made by equipment in two or more geographically separated PCSs. However, the history client 120 may also determine that data properties from the explorer window are selected (block 830), in which case the one or more data properties may be plotted in the plotting window 404 (block 832). To that end, the user has the ability to quickly identify stored data of interest and make comparisons between relevant instances of such stored data without searching through a massive data historian 118.

FIG. 9 is a block diagram of an example processor system 910 that may be used to implement the apparatus and methods described herein. As shown in FIG. 9, the processor system 910 includes a processor 912 that is coupled to an interconnection bus 914. The processor 912 includes a register set or register space 916, which is depicted in FIG. 9 as being entirely on-chip, but which could alternatively be located entirely or partially off-chip and directly coupled to the processor 912 via dedicated electrical connections and/or via the interconnection bus 914. The processor 912 may be any suitable processor, processing unit or microprocessor. Although not shown in FIG. 9, the system 910 may be a multi-processor system and, thus, may include one or more additional processors that are identical or similar to the processor 912 and that are communicatively coupled to the interconnection bus 914.

The processor 912 of FIG. 9 is coupled to a chipset 918, which includes a memory controller 920 and a peripheral input/output (I/O) controller 922. As is well known, a chipset typically provides I/O and memory management functions as well as a plurality of general purpose and/or special purpose registers, timers, etc. that are accessible or used by one or more processors coupled to the chipset 918. The memory controller 920 performs functions that enable the processor 912 (or processors if there are multiple processors) to access a system memory 924 and a mass storage memory 925.

The system memory 924 may include any desired type of volatile and/or non-volatile memory such as, for example, static random access memory (SRAM), dynamic random access memory (DRAM), flash memory, read-only memory (ROM), etc. The mass storage memory 925 may include any desired type of mass storage device including hard disk drives, optical drives, tape storage devices, databases, etc.

The peripheral I/O controller 922 performs functions that enable the processor 912 to communicate with peripheral input/output (I/O) devices 926 and 928 and a network interface 930 via a peripheral I/O bus 932. The I/O devices 926 and 928 may be any desired type of I/O device such as, for example, a keyboard, a video display or monitor, a mouse, etc. The network interface 930 may be, for example, an Ethernet device, an asynchronous transfer mode (ATM) device, an 802.11 device, a DSL modem, a cable modem, a cellular modem, etc. that enables the processor system 910 to communicate with another processor system.

While the memory controller 920 and the I/O controller 922 are depicted in FIG. 9 as separate functional blocks within the chipset 918, the functions performed by these blocks may be integrated within a single semiconductor circuit or may be implemented using two or more separate integrated circuits.

Although certain methods, apparatus, and articles of manufacture have been described herein, the scope of coverage of this patent is not limited thereto. To the contrary, this patent covers all methods, apparatus, and articles of manufacture fairly falling within the scope of the appended claims either literally or under the doctrine of equivalents.
The preferred embodiments of the preceding disclosure can be summarized as follows:
Aspect 1 is a method to standardize data properties in a process control environment comprising:
   associating a function block with a primary key;
   associating at least one data property associated with the process control environment with the primary key; and
   storing an instance of the at least one data property in a history database associated with the process control environment.
Aspect 2 is a method as defined in aspect 1, wherein the instance comprises a set of data property measurements between a start time and an end time.
Aspect 3 is a method as defined in aspect 2, further comprising storing the primary key with the instance of the at least one data property.
Aspect 4 is a method as defmed in aspect 1, further comprising associating the at least one data property with at least one local data property.
Aspect 5 is a method as defined in aspect 4, wherein associating the at least one data property with the at least one local data property comprises resolving nomenclature associated with the at least one local data property.
Aspect 6 is a method as defined in aspect 1, further comprising associating the function block with at least one secondary key so that the stored instance is associated with the primary key and the at least one secondary key.
Aspect 7 is a method as defined in aspect 1, wherein the history database is at least one of a local history database associated with a process control plant or a global history database associated with the process control environment.
Aspect 8 is a method as defined in aspect 1, further comprising searching for the instance in the history database via the primary key.
Aspect 9 is a method as defined in aspect 8, further comprising searching for the instance in the history database via the primary key and at least one secondary key.
Aspect 10 is an apparatus to standardize data properties in a process control environment comprising:
   a controller associated with a process control system to execute at least one function block;
   at least one field device operatively connected to the controller to measure a value associated with at least one data property; and
   a history client associated with the process control system to associate the at least one function block with a primary key.
Aspect 11 is an apparatus as defined in aspect 10, wherein the at least one function block comprises at least one instruction to measure the value associated with the at least one data property, wherein the at least one instruction includes a local name resolved to a global name by the history client.
Aspect 12 is an apparatus as defined in aspect 10, further comprising a local history database to store an instance of the at least one data property.
Aspect 13 is an apparatus as defined in aspect 12, further comprising a history standardizer to receive the instance of the at least one data property and store the instance in a global history database.
Aspect 14 is an apparatus as defined in aspect 13, wherein the history standardizer facilitates a user interface to facilitate a search for the instance via the primary key.
Aspect 15 is a machine accessible medium having instructions stored thereon that, when executed, cause a machine to:
   associate a function block with a primary key;
   associate at least one data property associated with the process control environment with the primary key; and
   store an instance of the at least one data property in a history database associated with the process control environment.
Aspect 16 is a machine accessible medium as defined in aspect 15, having instructions stored thereon that, when executed, cause the machine to associate the at least one data property with at least one local data property.
Aspect 17 is a machine accessible medium as defined in aspect 16, having instructions stored thereon that, when executed, cause the machine to resolve nomenclature associated with the at least one local data property.
Aspect 18 is a machine accessible medium as defined in aspect 15, having instructions stored thereon that, when executed, cause the machine to associate the function block with the at least one secondary key so that the stored instance is associated with the primary key and the at least one secondary key.
Aspect 19 is a machine accessible medium as defined in aspect 15, having instructions stored thereon that, when executed, cause the machine to search for the instance in the history database via the primary key.
Aspect 20 is a machine accessible medium as defined in aspect 19, having instructions stored thereon that, when executed, cause the machine to search for the instance in the history database via the primary key and at least one secondary key.

## Claims

1. A method to standardize data properties in a process control environment (100) between geographically separated process control plants (A-C), a first process control plant (A) including a module (128a) having a plurality of function blocks (136a-d) that define functions performed by field devices (134a-c) to implement a process control routine, wherein the function blocks (136) cause the field devices (134a-c) to acquire measurement values such as pressure values, temperature values, flow values, voltage values or current values etc., the method comprising the steps of:
executing a process control routine for a first process control plant (A) resulting in measurement values acquired by the field devices (134a-c);
storing the measurement values in a data historian (118) of the first process control plant (A);
associating data properties with a key, wherein the data properties represent measurement values of interest;
storing the measurement values of interest in a history client (120) of the first process control plant (A) using the key;
sending the associated key to a history standardizer (110), the history standardizer (110) communicatively linking the first process control plant (A) with geographically separated plants (B-C) via an intra-plant bus (102), in order to maintain consistency in a product of interest between geographically separated plants (A-C).

2. The method of claim 1, further comprising mapping local parameters that are monitored, measured, and/or otherwise controlled during local function block execution to a globally identified parameter nomenclature associated with a selected key profile for the local function block.

3. The method of according to any one of the preceding claims, further comprising:
associating a sub-key for each of a plurality of phases of the process control routine;
invoking a history client at a geographically separated plant; and
sending one or more keys and sub-keys from the first process control plant to one of the geographically separated plants via the history standardizer in response to invoking the history client at the geographically separated plant.

4. The method according to any one of the preceding claims, further comprising appending information to measurement values before sending the associated key and the measurement values to the history client of the second-geographically separated plant via a history standardizer, the information including an indication of which plant the measurement values came from, an indication of which process control system the measurement values came from, a localized equipment name to which the measurement values are associated, and a localized parameter name used by the process control system for the measurement values.

5. The method according to anyone of the preceding claims, further comprising instances-comparing instances of the product between batches made by equipment in two or more geographically separated process control systems. [par. 0021]

6. The method according to anyone of the preceding claims, wherein storing measurement values in the history client of the first process control plant includes storing measurement values in the history client after expiration of a wait time, the wait time corresponding to initial conditions for manufacturing a product of the first process control plant.

7. The method according to anyone of the preceding claims, wherein storing
measurement values in the history client of the first process control plant using the key further includes determining one or more of a transform, a formula, or a script for the measurement values and applying the determined transform, formula, or script to the measurement values.

8. An apparatus to standardize data properties in a process control environment between geographically separated process control plants (A-C), a first process control plant (A) comprising:
a module (128a) having a plurality of function blocks (136a-d) that define functions performed by field devices (134a-c), the module configured to implement a process control routine, wherein the function blocks (136a-d) cause the field devices (134a-c) to acquire measurement values such as pressure values, temperature values, flow values, voltage values or current values etc;
a controller (130) associated with a process control system (124), the controller configured to execute at least one of the function blocks;
at least one field device (134a) operatively connected to the controller (130), the field device configured to measure a value associated with at least one data property;
a data historian (118) configured to save first measurement values corresponding to a plurality of data properties for the process control routine during execution of the plurality of function blocks at a first process control plant (A);
a history client (120) configured to:
associate a key with a data property of the first measurement values;
store measurement values of interest in a history client (120) of the first process control plant using the key, wherein the measurement values of interest correspond to the data property during operation of the first process control plant;
a history standardizer (110) communicatively linking the first process control plant (A) with geographically separated plants (B-C) via an intra-plant bus (102), in order to maintain consistency in a product of interest between geographically separated plants (A-C).

9. The apparatus of claim 8, wherein the history client is further configured to send the associated key and the measurement values to a history client of a control geographically separated plant via a history standardizer (110), the history standardizer configured to communicatively link both the first and second process control plants via an intra-plant bus (102).

10. The apparatus of claim 8 or 9, wherein the history client is further configured to map local parameters that are monitored, measured, and/or otherwise controlled during local function block execution to a globally identified parameter nomenclature associated with a selected key profile for the local function block.

11. The apparatus according to any one of claims 8 to 10, wherein the history client is further configured to:
associate a sub-key for each of a plurality of phases of the process control routine;
invoke a history client at a geographically separated plant; and
send one or more keys and sub-keys from the first process control plant to one of the geographically separated plants plant via the history standardizer in response to invoking the history client at the geographically separated plant.

12. The apparatus according to any one of claims 8 to 11, wherein the history standardizer is further configured to append information to measurement values before sending the associated key and the measurement values to the history client of the geographically separated plant, the information including an indication of which plant the measurement values came from, an indication of which process control system the measurement values came from, a localized equipment name to which the measurement values are associated, and a localized parameter name used by the process control system for the measurement values.

13. The apparatus according to anyone of claims 8 to 12, further comprising a history client of the second process control plant configured to compare instances of the product between batches made by equipment in two or more geographically separated process control systems.

14. The apparatus according to anyone of claims 8 to 13, wherein the history client (120) is further configured to store measurement values in the history client of the first process control plant (A) after expiration of a wait time, the wait time corresponding to initial conditions for manufacturing a product of the first process control plant.

15. The apparatus according to anyone of claims 8 to 14, wherein the history client is further configured to:
determine one or more of a transform, a formula, or a script for the measurement values; and
apply the determined transform, formula, or script to the measurement values.
